Europäisches Patentamt

European Patent Office

Office européen des brevets

(11) Veröffentlichungsnummer: **0 277 586 B1**

(12) **EUROPÄISCHE PATENTSCHRIFT**

(45) Veröffentlichungstag der Patentschrift: **13.11.91**　(51) Int. Cl.⁵: **F17D 3/08**

(21) Anmeldenummer: **88101141.5**

(22) Anmeldetag: **27.01.88**

(54) **Dosierventil an molchbarer Rohrleitung.**

(30) Priorität: **03.02.87 DE 3703115**

(43) Veröffentlichungstag der Anmeldung:
**10.08.88 Patentblatt 88/32**

(45) Bekanntmachung des Hinweises auf die
Patenterteilung:
**13.11.91 Patentblatt 91/46**

(84) Benannte Vertragsstaaten:
**BE DE ES FR GB IT NL**

(56) Entgegenhaltungen:
**DE-A- 3 118 895**
**DE-A- 3 244 380**

(73) Patentinhaber: **DOVER CORPORATION**
**277 Park Avenue**
**New York N.Y. 10172(US)**

(72) Erfinder: **Skibowski, Hubert**
**Hüllenkamp 54**
**W-2000 Hamburg 73(DE)**

(74) Vertreter: **Dipl.-Ing. H. Hauck Dipl.-Ing. E.**
**Graalfs Dipl.-Ing. W. Wehnert Dr.-Ing. W. Dö-**
**ring**
**Neuer Wall 41**
**W-2000 Hamburg 36(DE)**

## Beschreibung

Die Erfindung bezieht sich auf ein Dosierventil an einer molchbaren Rohrleitung nach dem Oberbegriff des Patentanspruchs 1.

Rohrleitungen, über die flüssiges oder pastöses Medium gefördert wird, werden zunehmend auf Molchfähigkeit hin ausgelegt. Auf diese Weise können sehr unterschiedliche Medien nacheinander über dieselbe Leitung gefördert werden, wenn zwischen den Fördervorgängen ein Reinigen/Entleeren der Leitung mit Hilfe von Rohrleitungsmolchen durchgeführt wird. Die Armaturen in derartigen Rohrleitungen müssen ebenfalls molchbar sein.

Es besteht häufig die Aufgabe, eine oder mehrere Zusatzkomponenten zeitgleich in eine Rohrleitung einzutragen. Das erforderliche Ventil, über das eine Komponente in die Rohrleitung eingespeist wird, muß daher auch Regelcharakteristik aufweisen.

Aus der DE-A-32 44 380 ist ein Ventil der eingangs genannten Art bekanntgeworden, bei dem das Ventilglied beim Öffnen mit Hilfe einer Verstellvorrichtung von der Rohrleitung fort verstellt wird. Ein am Ventilglied angebrachter Zapfen greift in eine Längsführung ein, so daß das Ventilglied unverdrehbar geführt ist.

Der Erfindung liegt die Aufgabe zugrunde, ein Ventil dieser Art so weiterzubilden, daß es zugleich einen Molchanschlag bildet sowie eine Druckentlastung aufweist.

Diese Aufgabe wird erfindungsgemäß durch die Merkmale des Kennzeichnungsteils des Patentanspruchs 1 gelöst.

Bei dem erfindungsgemäßen Dosierventil wird das Ventilglied in die Rohrleitung hineinverstellt. Hierdurch werden zwei Vorteile erhalten. Der eine besteht darin, daß das Ventilglied in wirksamer Weise in seiner Öffnungsstellung einen Molchanschlag bilden kann. Außerdem ist durch eine derartige Anordnung des Ventilglieds sichergestellt, daß bei einem Überdruck in der molchbaren Rohrleitung in jedem Fall vermieden wird, das Produktmedium über das Ventil in die Abzweigung und zum Beispiel zu einem Behälter gelangt und dort den Behälterinhalt unbrauchbar macht. Auch durch den größten Druck in der molchbaren Rohrleitung wird das Ventilglied lediglich gegen seinen Sitz gepreßt und daran gehindert zu öffnen.

Die Ausbildung des Ventilglieds als Kolben in Verbindung mit einem weiteren Kolben stellt sicher, daß in der Schließstellung ein Öffnen des Ventils durch einen Druck in der Zuleitung verhindert wird. Da das Ventil zu Dosierzwecken eingesetzt werden soll, muß es Zwischenstellungen einnehmen können. Die Kolbenanordnung verhindert, daß durch Druckschwankungen die Position des Ventilglieds beeinflußt wird.

Durch die Bemessung der Kolben mit gleich großer Wirkfläche wird eine vollständige Druckentlastung erhalten. Es ist jedoch auch denkbar, den zweiten Kolben in seiner Wirkfläche etwas größer auszubilden, um dadurch ständig eine Vorspannung in die Schließstellung des Ventils zu erhalten, solange ein Mediumdruck ansteht.

Da bei der Erfindung das Ventilglied beim Öffnen in die Rohrleitung hineinbewegt wird, muß der Ventilsitz auf der der Rohrleitung abgewandten Seite des Ventilglieds liegen. In diesem Zusammenhang sieht eine Ausgestaltung der Erfindung vor, daß das Ventilglied aus zwei tellerartigen gegeneinandergespannten Abschnitten besteht, der untere Abschnitt in einer Ringnut einen elastomeren Dichtring aufnimmt, der vom anderen, einen kleineren Außendurchmesser aufweisenden Abschnitt gehalten ist und der Rohrstutzen eine Ringschulter aufweist, gegen die der Dichtring in der Schließstellung des Ventils anliegt. Bei dieser Ausführungsform der Erfindung ist der Dichtring sicher im Ventilglied gehalten und kann aufgrund seiner Dreiviertelfassung auch nicht durch strömende Medien und Druckdifferenzen herausgerissen werden. Lediglich sein radial über den oberen Ventilgliedabschnitt hinausstehender Teil tritt mit der Ringschulter bzw. der zugekehrten Kante der Ringschulter in Eingriff, um das Ventil in der Schließstellung wirksam abzudichten.

Da das Ventilglied der Rohrleitungswandungskontur angepaßt ist, muß es seine jeweilige Drehlage beibehalten. Eine Ausgestaltung sieht in diesem Zusammenhang vor, daß an der Rückseite des Ventilglieds eine Führung angebracht ist, die mit einer stutzenfesten Führung zusammenwirkt. Die Führung kann in einem Ansatz innerhalb des Rohrstutzens bestehen, der mit einer achsparallelen Ausnehmung oder Bohrung versehen ist, durch die sich die Führung oder eine Führungsstange hindurcherstreckt. Die Führung, z.B. eine Rippe oder eine Führungsstange ist so angeordnet, daß sie für das durch das Ventil strömende Medium kein zu großes Hindernis darstellt, vor allen Dingen keine Turbulenzen verursacht, sondern hilft, den Produktionsstrom gegen Drehung/Drall zu stabilisieren.

Die Erfindung wird nachfolgend anhand von Zeichnungen näher erläutert.

Fig. 1      zeigt im Schnitt eine molchbare Rohrleitung mit einem Dosierventil nach der Erfindung.

Fig. 2      zeigt eine Einzelheit der Darstellung nach Fig. 1.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

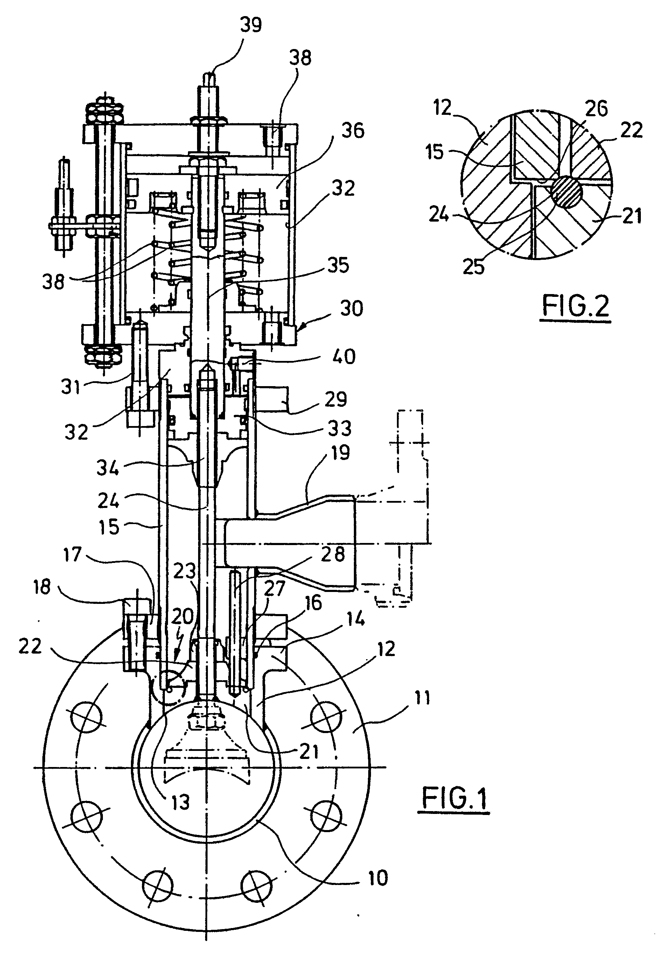

In Fig. 1 ist ein Rohrleitungsstück 10 geschnitten dargestellt. Das Stück weist einen hinteren Flansch 11 auf zur Verbindung mit einer Rohrleitung. Am vorderen Ende (nicht zu sehen) kann ebenalls ein dem Flansch 11 entsprechender Flansch angebracht sein. Mit dem Rohrstück 10 ist ein Rohrstutzen 12 verschweißt, durch den eine Ventilöffnung 13 gebildet ist. Der Rohrstutzen ist radial zum Rohr 10 angeordnet und weist am freien Ende einen Flansch 14 auf. Der Rohrstutzen 12 ist im oberen Bereich im Innendurchmesser erweitert. Der erweiterte Bereich nimmt einen Zylinder 15 auf, der mit Hilfe einer Dichtung 16 abgedichtet vom Rohrstutzen 12 aufgenommen ist. Auf dem Zylinder 15 sitzt ein Flansch 17, der mit dem Flansch 14 verschraubt ist, wie durch den Schraubenbolzen 18 angedeutet. Der Zylinder 15 ist mit einem Anschlußstutzen 19 versehen, über den flüssiges oder fließfähiges Medium in den Zylinder 15 eingetragen werden kann.

Im Rohrstutzen 12 ist ein Ventilglied 20 angeordnet, das aus einem unteren tellerförmigen Abschnitt 21 und einem oberen tellerförmigen Abschnitt 22 besteht, der mit Hilfe einer Mutter 23 gegeneinander verspannt sind,die auf einen Gewindeabschnitt einer Ventilstange 24 geschraubt ist. Die Ventilstange 24 ist durch Bohrungen der Ventilgliedabschnitte 21, 22 hindurchgeführt und mit dem unteren Abschnitt 21 verschweißt. Wie insbesondere aus Fig. 2 erkennbar, weist der obere Abschnitt 22 einen geringeren Außendurchmesser als der untere Abschnitt 21 auf. Letzterer besitzt eine in axialer Richtung offene Ringnut 24, in der ein elastomerer Dichtring 25 aufgenommen ist. Er wird durch den oberen Abschnitt 22 in der Nut 24 sicher gehalten, so daß sie auch durch größere Kräfte nicht aus der Nut 24 herausgezogen werden kann. Der Innendurchmesser des Zylinders 15 ist geringer als der Durchmesser der Bohrung des Rohrstutzens 25 im unteren Bereich, so daß eine Schulter 26 gebildet ist. Der radial innen liegende Rand der Schulter 26 fällt mit dem freiliegenden Teil des Dichtrings 25 zusammen, um in der in Fig. 1 in durchgezogenen Linien gezeigten Schließstellung des Ventilglieds 20 eine wirksame Abdichtung herbeizuführen.

Aus Fig. 1 ist zu erkennen, daß die dem Rohr 10 zugekehrte Seite des unteren Abschnitts 21 die gleiche Krümmung aufweist wie das Rohr 10. In Draufsicht ist jedoch das Ventilglied 20 kreisförmig.

An der Innenwand des Zylinders 15 ist ein Ansatz 27 angebracht mit einer achsparallelen Durchbohrung, durch die eine Führungsstange 28 hindurchgeführt ist. Die Führungsstange ist durch eine exzentrische Bohrung des oberen Abschnitts 22 hindurchgeführt und in den unteren Abschnitt 21 eingeschraubt. Die Stange 28 hat nur in Fig. 1 die gezeigte Lage. In Wirklichkeit ist sie in ihrer Lage um 90° versetzt, also außerhalb der Zylinderöffnung im Bereich des Anschlußstutzens 19. Die Führungsstange bildet eine Führung für das Ventilglied 20 und verhindert, daß es eine abweichende Drehstellung einnimmt. In der Offenstellung des Ventils wird außerdem das Ventilglied 20, das, wie strichpunktiert in Fig. 1 angedeutet im Rohr 10 liegt, dagegen gesichert, daß es durch strömendes Medium seitlich verstellt wird.

Im oberen Bereich sitzt auf dem Zylinderrohr 15 ein weiterer Flansch 29, der mit einem Gehäuse 30 verschraubt ist, wie durch den Schraubenbolzen 31 angedeutet. Zwischen der unteren Seite des Gehäuses 30 und dem zugekehrten Stirnende des Zylinders 15 ist ein Verschlußteil 32 für den Zylinder 15 dichtend festgelegt. Unterhalb des Verschlußteils 32 ist ein Kolben 33 zu erkennen, der mit Hilfe eines kegelartigen Teils 34, das auf einem Gewindeabschnitt der Stange 24 sitzt, gegen eine Verstellstange 35 festgelegt ist. Die Verstellstange 35, die durch den Abschlußteil 32 dichtend hindurchgeführt sowie dichtend in das Gehäuse 30 eingeführt ist, ist als Kolbenstange mit einem Kolben 36 verbunden, der dichtend im Zylinderraum 37 des Gehäuses 35 verschiebbar ist. Der Kolben 36 wird von zwei Federn 38 nach oben gedrückt, wobei sich die Federn 38 unten auf den Boden des Gehäuses 30 abstützen. Der obere Hubraum des Zylinderraums 37 ist über eine Bohrung 38 im Deckel des Gehäuses 30 mit der Außenseite verbunden. Die Bohrung dient zur Verbindung mit einem Druckmittelanschluß. Wird Druck auf die Bohrung 38 gegeben, wird der Kolben 36 nach unten verstellt, um das Ventilglied 20 in die strichpunktiert gezeigte Offenstellung zu bewegen. Je nach Höhe des Druckes ergibt sich ein unterschiedlicher Verstellweg für das Ventilglied 20. Das über den Anschluß 19 einströmende Medium wird daher mehr oder weniger gedrosselt in das Rohr 10 eingetragen.

Der Kolben 30 hat die gleiche Wirkfläche wie das als Kolben ausgebildete Ventilglied 20. Der Mediumdruck im Zylinder 15 wirkt sich daher nicht auf die Verstellung des Ventilglieds 20 aus. Die Stellung des Ventils wird im übrigen durch eine Stange 39 angezeigt, die mit der Kolbenstange 35 verbunden ist und die dichtend aus dem Gehäuse 30 herausgeführt ist.

Eine weitere Bohrung 40 ist mit dem Hubraum oberhalb des Kolbens 33 verbunden. Über die Bohrung 40 kann festgestellt werden, ob der Kolben 33 ausreichend dichtet.

Wie auch aus Fig. 1 erkennbar, kann das Ventilglied 20 in der Offenstellung als Molchanschlag wirken. Der vom Molch verursachte Stoß wird unter anderem von der Führungsstange 28 aufgefangen.

**Patentansprüche**

1. Dosierventil an einer molchbaren Rohrleitung, mit einer Verstellvorrichtung für das Ventilglied, das in einem Rohrstutzen (12) unverdrehbar geführt ist, der radial an der Rohrleitung (10) angebracht ist, und das in der Schließstellung mit der Kontur der Rohrrinnenwandung übereinstimmt, dadurch gekennzeichnet, daß die Verstellvorrichtung (30) das Ventilglied (20) zum Öffnen in die Rohrleitung (10) hineinverstellt, das Ventilglied (20) als Kolben ausgebildet ist und auf seiner Rückseite ein Zylinder (15) mit einem Anschluß (19) für eine Zuführleitung vorgesehen ist, in dem Zylinder auf der dem Ventilkolben (20) abgewandten Seite des Anschlusses (19) ein zweiter Kolben (33) angeordnet ist, der mit der Verstellvorrichtung (30) verbunden ist und der seinerseits über eine Stange (24) mit dem Ventilkolben (20) verbunden ist.

2. Dosierventil nach Anspruch 1, dadurch gekennzeichnet, daß das Ventilglied (20) aus zwei tellerartigen gegeneinandergespannten Abschnitten (21, 22) besteht, der untere Abschnitt (21) in einer Ringnut (24) einen elastomeren Dichtring (25) aufnimmt, der vom anderen, einen kleineren Durchmesser aufweisenden Abschnitt (22) gehalten ist und der Rohrstutzen (12) eine Ringschulter (26) aufweist, gegen die der Dichtring (25) in der Schließstellung des Ventils anliegt.

3. Dosierventil nach Anspruch 1 oder 2, dadurch gekennzeichnet, daß an der Rückseite des Ventilglieds (20) mindestens ein Führungsabschnitt (28) angebracht ist, der mit einer rohrstutzenfesten Führung (27) zusammenwirkt.

## Claims

1. A metering valve for a scraper-operable pipeline, comprising an adjusting means for the valve member which is non-rotatably guided in a connetion pipe (12) radially disposed on the pipeline (10) and which valve coincides with the profile of the pipeline inner wall in the closed position, characterized in that the adjusting means (30) displaces the valve member (20) for opening right into the pipeline, that the valve member (20) is formed as a piston and a cylinder (15) including a connection (19) for a supply line is provided at its back face, that a second piston (33) is provided in said cylinder at the side of the connection (19) opposite the valve piston (20), which second piston is connected to the adjusting means (30) and through a rod (24) with the valve piston (20).

2. The metering valve of claim 1, characterized in that the valve member (20) comprises a pair of disc-shaped portions (21, 22) clamped together, that the lower portion (21) receives an elastomer sealing ring (25) in an annular groove (24), that the sealing ring is held in position by the other portion (22) having a smaller diameter and that the connection pipe (12) is provided with an annular shoulder (26) to engage the sealing ring (25) in the closed position of the valve.

3. The metering valve of claim 1 or 2, characterized in that at least a guide means (28) is disposed at the rear side of the valve member (20) which guide means cooperates with a stationary guide (27).

## Revendications

1. Valve doseuse pour une tuyauterie adaptée à un écouvillon, comportant un dispositif de déplacement d'un organe de valve qui est guidé sans pouvoir y tourner dans un piquage tubulaire (12) rapporté sur la tuyauterie (10), et qui épouse dans la position de fermeture le contour de la paroi intérieure de la tuyauterie, caractérisée en ce que le dispositif de déplacement (30) fait pénétrer dans la tuyauterie (10) l'organe de valve (20) lors de l'ouverture, en ce que l'organe de valve (20) est réalisé sous forme d'un piston, en ce qu'un cylindre (15) est pourvu sur son côté arrière, d'un raccord (19) pour une conduite d'amenée, et en ce qu'un deuxième piston (33), qui est relié au dispositif de déplacement (30) et qui est aussi relié au piston de valve (20) par une tige (24) est disposé dans le cylindre du côté opposé au piston (20) de valve par rapport au raccord (19).

2. Valve doseuse selon la revendication 1, caractérisée en ce que l'organe de valve (20) se compose de deux parties (21, 22) en forme de disque serrées l'une contre l'autre, la partie inférieure (21) reçoit, dans une rainure annulaire (24), une bague d'étanchéité (25) en élastomère qui est maintenue par l'autre partie (22), de plus petit diamètre, et le piquage tubulaire (12) présente un épaulement annulaire (26) contre lequel vient porter la bague d'étanchéité (25) dans la position de fermeture de la valve.

3. Valve de dosage selon la revendication 1 ou 2, caractérisée en ce qu'au moins une pièce de guidage (28) qui coopère avec un guidage (27) relié rigidement au piquage, est disposée vers le côté arrière de l'organe de valve (20).

FIG.2

FIG.1